# EUROPÄISCHE PATENTSCHRIFT

(11) **EP 2 208 017 B1**
(45) Veröffentlichungstag und Bekanntmachung des Hinweises auf die Patenterteilung: **09.03.2011**
(21) Anmeldenummer: 08847973.8
(22) Anmeldetag: 07.11.2008
(51) Int. Cl.: G01B 21/04, G08C 17/00, B23Q 17/22, H04W 52/00

(54) **VERFAHREN ZUM ANLERNEN EINER SENDE-/EMPFANGSVORRICHTUNG AN EINE BASISSTATION IN EINEM POSITIONSMESSSYSTEM FÜR EINE MASCHINE**
METHOD FOR TEACHING A TRANSMISSION/RECEPTION DEVICE WITH RESPECT TO A BASIS STATION IN A POSITION MEASURING SYSTEM FOR A MACHINE
PROCÉDÉ D'APPRENTISSAGE D'UN DISPOSITIF D'ÉMISSION/RÉCEPTION RELATIF A UNE STATION DE BASE DANS UN SYSTÈME DE MESURE DE POSITION POUR UNE MACHINE

(30) Priorität: 08.11.2007 DE 102007053330
(43) Veröffentlichungstag der Anmeldung: 21.07.2010
(73) Patentinhaber: Blum-Novotest GmbH, 88287 Grünkraut-Gullen (DE)
(72) Erfinder: REISER, Wolfgang, 88267 Vogt (DE); HÄFELE, Stefan, 88069 Tettnang (DE)
(74) Vertreter: Schmidt, Steffen
(86) Internationale Anmeldenummer: PCT/EP2008/009430
(87) Internationale Veröffentlichungsnummer: WO 2009/059790

(56) Entgegenhaltungen:
- EP-A- 1 631 042
- WO-A-2004/057552
- WO-A-2007/028964
- DE-A1- 10 315 058
- US-A- 6 157 616
- US-A1- 2004 122 931
- US-B1- 6 363 423

## Beschreibung

### Hintergrund

Nachstehend wird eine Technik zum Anlernen einer Sende/Empfangsvorrichtung an eine Basisstation in einem Positionsmesssystem für eine Maschine beschrieben. Die Technik kann in einem Messsystem zum berührenden und berührungslosen Messen an stehenden und rotierenden Werkzeugen in einer Werkzeugmaschine verwendet werden.

### Stand der Technik

Messsysteme zum Einsatz in spanabhebenden oder materialabtragenden (zum Beispiel Fräsen, Drehen, Schleifen, Hobeln, Bohren, Senken, Reiben, Erodieren und dergleichen) Bearbeitungsmaschinen sind bekannt.

Zur Positionsbestimmung oder zur Bestimmung der längsten Schneide eines rotierenden Werkzeuges in Werkzeugmaschinen werden Lichtschranken, insbesondere Laserlichtschranken, bzw. für drückende oder ziehende Messungen Messtaster verwendet. Die gemessenen Positionsdaten werden an eine zentrale Steuerung weitergeleitet, welche diese Positionsdaten zur Steuerung des Werkzeugs der Werkzeugmaschine verwendet.

Zur Vermeidung von umfangreichen Verkabelungen ist es bekannt, für die Datenübertragung zwischen dem Messsystem, das heißt Lichtschranke oder Messtaster, und Steuerungseinheit eine Funkverbindung vorzusehen.

So ist aus der Druckschrift WO 2007/028964 A1 ein Messsystem bekannt, bei dem Messdaten zwischen einem Messtaster und einer Steuerung mit Hilfe einer Funkverbindung übertragen werden. Bei der Funkverbindung handelt es sich um eine Frequenzspreizverbindung mit einem Frequenzsprungverfahren. Nachteilig bei diesem Messsystem ist jedoch, dass Echtzeiterfordernisse, welche in der Werkzeugmaschine aufgrund von Messungen und davon abhängigen Werkzeug-Steuerungsvorgängen erforderlich sind, nicht immer eingehalten werden können. Frequenzsprungverfahren haben eine Verzögerungszeit von ungefähr 20ms. Solche Verzögerungszeiten können insbesondere beim Antasten eines Messtasters an ein zu messendes Objekt Probleme bereiten. Darüber hinaus haben solche Systeme eine gewisse Störanfälligkeit. Dies kann insbesondere in einem Messsystem in einer Werkzeugmaschine Interferenzprobleme ergeben, bei dem eine Vielzahl von Messtastern Signale an eine Steuerungseinheit senden. Da keine Regelung der Sendeleistung vorgesehen ist hat das vorgeschlagene Messsystem darüber hinaus einen erhöhten Energiebedarf, was bei einem batteriebetriebenen mobilen Messsystem zu Nachteilen führt. Die an dem Messkopf vorhandene drahtlose Kommunikationseinheit sendet digitale Datenpakete, umfassend einen Identitätscode, an eine Interfaceeinheit.

Aus der Druckschrift WO 2004/057552 A1 ist ein weiteres Messsystem mit einem Messtaster, der über eine Funkverbindung mit einer Steuerungseinheit in Verbindung steht, bekannt. Um eine erste Verbindung zwischen der Funkeinheit des Messtasters und der Steuerungseinheit herzustellen wird eine erste Nachricht mit einer normalen Sendeleistung gesendet. Falls die erste Sendung erfolglos ist, so wird bei nachfolgenden Sendungen die Sendeleistung Schritt für Schritt erhöht, bis eine Verbindung zwischen Funkeinheit des Messtasters und Steuerung aufgebaut ist. Dieses Verfahren hat jedoch den Nachteil, dass eine Verbindung zwischen Funkeinheit des Messtasters und Steuerung nur sehr langsam aufgebaut wird. Abhängig davon, ob eine Verbindung zwischen Funkeinheit des Messtasters und Steuerung zustande kommt, werden nachfolgende Nachrichten mit einer sukzessiv erhöhten Sendeleistung gesendet bis eine Kommunikation möglich ist. Da jeweils gewartet werden muss, ob eine Verbindung zwischen Funkeinheit des Messtasters und Steuerung zustande kommt, hat dieses Messsystem den Nachteil, dass in einem Messsystem für eine Werkzeugmaschine notwendige Echtzeitvoraussetzungen nicht eingehalten werden können. Darüber hinaus ist der Energieverbrauch bei ständig erhöhter Sendeleistung auf Dauer zu hoch, da keine Reduzierung der Sendeleistung vorgesehen ist. Die führt bei einem mobilen Messsystem zu dem Erfordernis eines häufigen Batteriewechsels.

Die Druckschrift EP 1 631 042 A1 betrifft ein Verfahren zum Zuweisen einer Geräteadresse von einer Hauptstation an eine Nebenstation in einem Ethernet, wobei die Nebenstation im Ethernet über eine Punkt-zu-Punkt-Verbindung angeschlossen ist.

Die Druckschrift US 2004/0122931 A1 betrifft eine Vorrichtung zum Bereitstellen einer global eindeutigen Geräteidentifikation in einem Local Area Network (LAN) oder Wide Area Network (WAN). In einer Ausführungsform setzt ein ID-System eine Vorrichtungs-ID für eine Vorrichtung und speichert die Vorrichtungs-ID zusammen mit weiteren von der Vorrichtung erlangten Informationen in einer Aufbewahrungsvorrichtung.

Die Druckschrift US 6,363,423 B1 betrifft ein System und ein Verfahren zum Erlangen und Zuordnen einer eindeutigen Media Access Control (MAC) Adresse zu einer Netzwerkadapterkarte in einem Computersystem, welches die Netzwerkadapterkarte zum Verbinden mit einem Datennetzwerk nutzt. Bei dem Datennetzwerk handelt es sich um ein Asynchronous Transfer Mode (ATM) über Asynchronous Digital Subscriber Line (ADSL) Netzwerk.

### Aufgabe

Ausgehend von dem oben genannten Stand der Technik besteht die Aufgabe darin, eine Technik zum Anlernen einer Sende-/Empfangsvorrichtung and eine Basisstation bereitzustellen, welche bei geringem Energieverbrauch eine robuste und zeitkritische Datenübertragung und einen schnellen Verbindungsaufbau ermöglicht.

### Lösung

Einige oder alle der vorstehend genannten Probleme werden durch ein Verfahren zum Anlernen einer Sende-/Empfangsvorrichtung an eine Basisstation in einem Positionsmeßsystem für eine Maschine mit den Merkmalen des Anspruchs 1 gelöst.

Ein nicht von den Patentansprüchen abgedechtes Verfahren zur Regelung der Sendeleistung einer Sende-/Empfangsvorrichtung in einem Positionsmesssystem für eine Maschine weist die Verfahrensschritte auf: Senden einer ersten Sendeleistungsnachricht mit einer ersten Sendeleistung und Senden einer zweiten Sendeleistungsnachricht mit einer zweiten Sendeleistung, wobei die zweite Sendeleistung kleiner als die erste Sendeleistung ist, falls eine Sendeleistungsbestätigungsnachricht als Antwort auf die gesendete erste Sendeleistungsnachricht empfangen wurde, und wobei die zweite Sendeleistung größer als die erste Sendeleistung ist, falls keine Sendeleistungsbestätigungsnachricht als Antwort auf die gesendete erste Sendeleistungsnachricht empfangen wurde. Bei der Sende-/Empfangsvorrichtung kann es sich um jede Art vom integriertem Sender und Empfänger handeln, der in der Lage ist, mit einer Basisstation zu kommunizieren. Zum Einsatz in einem Messsystem bei einem Messtaster kann es sich bei der Sende-/Empfangsvorrichtung um eine mobile, batteriebetriebene Sende-/Empfangsvorrichtung handeln.

Die Sendeleistungsnachrichten dienen zur Bestimmung, ob eine Funkkommunikation zwischen Sende-/Empfangsvorrichtung und einer Basisstation mit der aktuellen Sendeleistung möglich ist. Abhängig von den Übertragsbedingungen über die Luftschnittstelle, das heißt bei Interferenzen mit anderen Signalen, wird die Sendeleistung der Sende-/Empfangsvorrichtung nachgeregelt. Mit Hilfe der vorgeschlagenen Lösung kann die untere Sendeleistungsgrenze, d.h. die Sendeleistung mit der noch eine Kommunikation zwischen Sende-/Empfangsvorrichtung und Basisstation möglich ist, ermittelt werden. Dies vermeidet ein permanentes Senden mit einer überhöhten Sendeleistung. Dadurch wird Energie in der Sende-/Empfangsvorrichtung eingespart. Die Sende-/Empfangsvorrichtung sendet die Sendeleistungsnachrichten an eine mit der Sende-/Empfangsvorrichtung in Verbindung stehende Basisstation. Nach Aussenden der Sendeleistungsnachricht wartet die Sende-/Empfangsvorrichtung auf den Empfang einer Sendeleistungsbestätigungsnachricht. Falls die Sendeleistungsnachricht von einer mit der Sende-/Empfangsvorrichtung in Verbindung stehenden Basisstation empfangen wird, so sendet die Basisstation eine Sendeleistungsbestätigungsnachricht. Abhängig von dem Empfang der Sendeleistungsbestätigungsnachricht weiß die Sende-/Empfangsvorrichtung, ob eine Funkverbindung zwischen Sende-/Empfangsvorrichtung und Basisstation möglich ist. Abhängig von dieser Information kann die Sende-/Empfangsvorrichtung die Sendeleistung für eine nachfolgende Sendeleistungsnachricht erhöhen oder verringern.

Gemäß eines weiteren Verfahrensschrittes kann nach der zweiten Sendeleistungsnachricht eine dritte Sendeleistungsnachricht mit einer dritten Sendeleistung gesendet werden. Falls die Sendeleistung der zweiten Sendeleistungsnachricht kleiner als die Sendeleistung der ersten Sendeleistungsnachricht war und eine Sendeleistungsbestätigungsnachricht auf die zweite Sendeleistungsnachricht eingeht, so ist die dritte Sendeleistung kleiner als die zweite Sendeleistung. Falls die Sendeleistung der zweiten Sendeleistungsnachricht kleiner als die Sendeleistung der ersten Sendeleistungsnachricht war und keine Sendeleistungsbestätigungsnachricht auf die zweite Sendeleistungsnachricht eingeht, so ist die dritte Sendeleistung größer als die zweite Sendeleistung. Falls die Sendeleistung der zweiten Sendeleistungsnachricht größer als die Sendeleistung der ersten Sendeleistungsnachricht war und eine Sendeleistungsbestätigungsnachricht auf die zweite Sendeleistungsnachricht eingeht, so ist die dritte Sendeleistung gleich der zweiten Sendeleistung. Falls die Sendeleistung der zweiten Sendeleistungsnachricht größer als die Sendeleistung der ersten Sendeleistungsnachricht war und keine Sendeleistungsbestätigungsnachricht auf die zweite Sendeleistungsnachricht eingeht, so ist die dritte Sendeleistung größer als die zweite Sendeleistung.

Gemäß eines weiteren Verfahrensschrittes wird eine weitere Sendeleistungsnachricht gesendet. Falls die Sendeleistungen der beiden der weiteren Sendeleistungsnachricht direkt vorausgegangenen Sendeleistungsnachrichten gleich sind und ein vorbestimmtes Zeitintervall nicht verstrichen ist, so ist die Sendeleistung der weiteren Sendeleistungsnachricht gleich der Sendeleistung der beiden vorausgegangenen Sendeleistungsnachrichten. Bei dem Zeitintervall kann es sich um ein Zeitintervall seit dem ersten Senden einer Sendeleistungsnachricht handeln.

Alternativ kann die Sendeleistung der Sendeleistungsnachrichten ein vorbestimmtes Zeitintervall lang nur nach oben oder nur nach unten geregelt werden bis eine Sendeleistungsbestätigungsnachricht als Antwort auf eine Sendeleistungsnachricht empfangen wird und dann die Sendeleistung der Sendeleistungsnachrichten bis zum Ende des vorbestimmten Zeitintervalls unverändert bleibt. Eine Erhöhung der Sendeleistung der Sendeleistungsnachrichten vor Ende des vorbestimmten Zeitintervalls findet in diesem Fall nur dann statt, falls keine Sendeleistungsbestätigungsnachricht als Antwort auf eine Sendeleistungsnachricht empfangen wird. Nach Ablauf des vorbestimmten Zeitintervalls kann die Sendeleistung der Sendeleistungsnachrichten wieder erhöht oder verringert werden.

Nach Erhalt einer Sendeleistungsbestätigungsnachricht als Antwort auf eine Sendeleistungsnachricht kann die Sendeleistung der Sendeleistungsnachrichten auch konstant bleiben, und nach Ablauf eines vorbestimmten Zeitintervalls ohne ein Ausbleiben einer Sendeleistungsbestätigungsnachricht als Antwort auf eine Sendeleistungsnachricht die Sendeleistung der nachfolgenden Sendeleistungsnachricht verringert werden. Die Verringerung der Sendeleistung der Sendeleistungsnachrichten kann in diesem Fall wieder sukzessive so lange erfolgen, bis keine Sendeleistungsbestätigungsnachricht als Antwort auf eine Sendeleistungsnachricht empfangen wird.

Des weiteren können auch Aufwärtsregelungsphasen, d.h. Zeitintervalle, in denen die Sendeleistung der Sendeleistungsnachrichten nur nach oben geregelt wird und/oder gleich bleibt, und/oder Abwärtsregelungsphasen, d.h. Zeitintervalle, in denen die Sendeleistung der Sendeleistungsnachrichten nur nach unten geregelt wird und/oder gleich bleibt, vorgegeben sein.

Da, falls keine Verbindung zwischen Sende-/Empfangsvorrichtung und Basisstation vorhanden ist, auch keine Sendeleistungsbestätigungsnachricht von der Basisstation and die Sende-/Empfangsvorrichtung gesendet wird, geht die Sende-/Empfangsvorrichtung nach dem Ablauf eines vorbestimmten Zeitintervalls ohne Empfang einer Sendeleistungsbestätigungsnachricht als Antwort auf die gesendete erste Sendeleistungsnachricht davon aus, dass keine Sendeleistungsbestätigungsnachricht empfangen wurde. Dadurch werden Kollisionen von Bestädgungsnachrichten und Synchronisationsprobleme vermieden.

Bevorzugt ist die zweite Sendeleistung einen vorbestimmten Sendeleistungswert kleiner oder größer als die erste Sendeleistung. Die Veränderungen der Sendeleistungen zwischen nachfolgenden Sendeleistungsnachrichten können sich um einen vorbestimmten Sendeleistungswert unterscheiden. Zwischen den nachfolgende Sendeleistungsnachrichten können auch eine oder mehrere Sendeleistungsnachrichten mit einem konstanten Sendeleistungswert gesendet werden.

Damit beim Start des Verfahrens immer eine Verbindung zwischen Sende-/Empfangsvorrichtung und Basisstation möglich ist wird beim Start des Verfahrens eine Sendeleistungsnachricht mit einer maximalen bzw. nahezu maximalen Sendeleistung der Sende-/Empfangsvorrichtung gesendet. Bei dem Start des Verfahrens kann es sich um einen Anlernvorgang der Sende-/Empfangsvorrichtung an eine Basisstation oder ein erstes Senden einer Sendeleistungsnachricht nach Einschalten einer Werkzeugmaschine oder bei Beginn eines neuen Messzyklusses handeln. Nachfolgende Sendeleistungsnachrichten können solange mit jeweils sukzessive verringerter Sendeleistung gesendet werden, bis keine Sendeleistungsbestätigungsnachricht auf eine Sendeleistungsnachricht eingeht. Somit beginnt die Regelung der Sendeleistung der Sende-/Empfangsvorrichtung mit einem maximalen Wert und tastet sich sukzessive an die untere Sendeleistungsgrenze heran. Sobald die untere Sendeleistungsgrenze bestimmt wurde, erfolgt eine sukzessive Regelung der Sendeleistung nach oben bzw. unten entlang des Grenzwerts der Sendeleistung für eine sichere Datenübertragung.

Zum Anlernen bzw. zur Registrierung einer Sende-/Empfangsvorrichtung an eine Basisstation und/oder zum Wecken eines mit der Sende-/Empfangsvorrichtung verbundenen Messtasters wird ferner eine Anfragenachricht von der Sende-/Empfangsvorrichtung an die Basisstation gesendet.

Bevorzugt wird die Anfragenachricht mit einer Sendeleistung gesendet, die einen vorbestimmten Sendeleistungswert über der Sendeleistung der Sendeleistungsnachricht liegt. Die aktuelle Sendeleistung der Sendeleistungsnachricht gibt die untere Sendeleistungsgrenze an. Die Anfragenachricht soll jedoch, um Echtzeiterfordemissen zu genügen, immer von der Basisstation erfolgreich empfangen werden. Aus diesem Grund wird die Anfragenachricht mit einer Sendeleistung gesendet, welche der Sendeleistung der Sendeleistungsnachricht und zusätzlich einem Sicherheitswert entspricht. Der Sicherheitswert der Sendeleistung wird so gewählt, dass ein Empfang der Anfragenachricht in der Basisstation auch bei plötzlich erhöhten Interferenzen auf der Luftschnittstelle noch gewährleistet ist.

Falls die Basisstation mit der Sende-/Empfangsvorrichtung kommunizieren will bzw. der Messtaster aus einem Energiesparmodus geweckt werden soll, so antwortet die Basisstation auf die Anfragenachricht mit einer Anfragebestätigungsnachricht. Die Sende-/Empfangsvorrichtung empfängt die Anfragebestätigungsnachricht als Antwort auf die gesendete Anfragenachricht jedoch nur innerhalb eines vorbestimmten Zeitintervalls nach dem Senden der Anfragenachricht. Wird keine Anfragebestätigungsnachricht innerhalb des vorbestimmten Zeitintervalls nach dem Senden der Anfragenachricht von der Sende-/Empfangsvorrichtung empfangen, so geht die Sende-/Empfangsvorrichtung davon aus, dass die Basisstation keine Kommunikation mit der Sende-/Empfangsvorrichtung wünscht. Entsprechend würde eine nach dem vorbestimmten Zeitintervall eingehende Anfragebestätigungsnachricht verworfen werden. Dies ermöglicht eine weitere Energieeinsparung auf Seiten der Sende-/Empfangsvorrichtung. Dies hat beispielsweise gegenüber bekannten Lösungen bei Infrarotsystemen, bei denen ständig nach entsprechenden Nachrichten von einer Basisstation gesucht wird, den Vorteil, dass in der Sende-/Empfangsvorrichtung nur beim Senden der Anfragenachricht Energie verbraucht, nach Ablauf des vorbestimmten Zeitintervalls bis zum Senden einer erneuten Anfragenachricht jedoch für die Anfragenachricht keine weitere Energie benötigt wird. Darüber hinaus werden Nachrichtenüberlappungen vermieden.

Falls innerhalb des vorbestimmten Zeitintervalls auf die gesendete Anfragenachricht eine Anfragebestätigungsnachricht empfangen wird, so gibt die Sende-/Empfangsvorrichtung ein Wecksignal aus. Durch dieses Wecksignal kann der mit der Sende-/Empfangsvorrichtung in Verbindung stehende Messtaster der Werkzeugmaschine von einem Energiesparmodus in einen Betriebsmodus versetzt werden.

Bevorzugt werden die Anfragenachrichten und/oder die Sendeleistungsnachrichten zyklisch bzw. periodisch von der Sende-/Empfangsvorrichtung gesendet. Dadurch ist eine synchronisierte Regelung der Sendeleistung möglich.

Um die Kommunikation zwischen Sende-/Empfangsvorrichtung und Basisstation robust gegenüber Störungen zu gestalten und bei geringem Energieverbrauch auch die notwendigen Echtzeitkriterien einzuhalten werden die Nachrichten mit Hilfe von Chirp-Signalen in einem Frequenzspreizverfahren übertragen. Bei der Frequenzspreizung handelt es sich um ein Verfahren zur Datenübertragung per Funk bei dem ein schmalbandiges Signal in ein breitbandiges Signal umgewandelt wird. Die Sendeenergie, die zuvor in einem kleinen Frequenzbereich konzentriert war, wird dabei auf einen größeren Frequenzbereich verteilt. Dies liefert eine hohe Robustheit gegenüber schmalbandigen Störungen, beispielsweise durch Bluetooth (R)- oder W-LAN-Signale. Bei einem Chirp-Signal handelt es sich um ein Signal, welches innerhalb eines definierten Zeitintervalls mit einer (konstanten) Frequenzänderung beginnend bei einem definierten Frequenzstartwert hin zu einem definierten Frequenzendwert übertragen wird. In Abhängigkeit von dem Frequenzstartwert und dem Frequenzendwert spricht man von einem "Upchirp" oder einem "Downchirp". Eine Nachrichtenübertragung mit Hilfe von Chirp-Signalen hat den Vorteil einer hohen Robustheit gegenüber schmalbandigen Störungen. Die Signale werden bevorzugt im Industrial, Scientific and Medical (ISM)-Frequenzband (beginnend bei 2,4 GHz) übertragen. Informationen werden als logische Informationen ("0" oder "1") übertragen, wodurch das gesamte Industrial, Scientific and Medical (ISM)-Frequenzband genutzt werden kann. Das ISM-Frequenzband ist ein lizenzfreies Frequenzband in dem ohne Lizenzkosten gesendet werden kann. Es erfolgt ferner eine energieeffiziente Übertragung, da das Frequenzspektrum über die verfügbare Bandbreite nahezu ideal ausgenutzt werden kann. Darüber hinaus ist die Signalenergie pro Frequenz gering, wodurch kaum eine Beeinflussung anderer Funksysteme, zum Beispiel W-LAN oder Bluetooth (R), stattfindet. Dies ist insbesondere von Vorteil z.B. in einer Werkshalle, in der eine Vielzahl von Werkzeugmaschinen und Kommunikationssysteme senden und ein hohes Interferenzpotential vorhanden ist. Darüber hinaus ermöglichen Chirp-Signale geringere Verzögerungszeiten als beispielsweise Frequenzsprungverfahren. Dies ist insbesondere beim Antasten eines Messtasters an ein Werkstück von Vorteil. Es ist keine Wartezeit auf einen Sende-Zeitschlitz erforderlich, so dass keine Synchronisation notwendig ist. Bei der Übertragung mit Hilfe von Chirp-Signalen sind Verzögerungszeiten von 1 bis 1,5ms möglich. Somit ist ein optimiertes Echtzeitverhalten bei geringer Störungsanfälligkeit möglich. Durch die bekannte Verzögerung wird des weiteren die Notwendigkeit eines wiederholten Sendens von Nachrichten aufgrund von Störungen reduziert.

Damit eine Sende-/Empfangsvorrichtung mit einer Basisstation kommunizieren kann, muss die Sende-/Empfangsvorrichtung an der Basisstation angelernt bzw. registriert werden. Dazu empfängt die Sende-/Empfangsvorrichtung von der Basisstation eine Basis-Seriennummer und berechnet eine Gruppen ID aus der empfangenen Basis-Seriennummer. Bei der Basis-Seriennummer kann es sich um jede Art von Nummer handeln, welche die Basisstation eindeutig identifiziert.

Für den weiteren Anlernvorgang wird die Seriennummer der Sende-/Empfangsvorrichtung von der Sende-/Empfangsvorrichtung an die Basisstation gesendet. Aus der empfangenen Basis-Seriennummer wird ferner eine Basis ID und aus der Seriennummer der Sende-/Empfangsvorrichtung eine Geräte ID berechnet. Bei der Seriennummer der Sende-/Empfangsvorrichtung kann es sich um jede Art von Nummer handeln, welche die Sende-/Empfangsvorrichtung eindeutig identifiziert.

Nach Abschluss der vorangegangen Verfahrensschritte ist die Sende-/Empfangsvorrichtung an die Basisstation angelernt und kann mit dieser kommunizieren. Zur Kommunikation empfängt die Sende-/Empfangsvorrichtung ein Datenpaket von der Basisstation. Das Datenpaket enthält eine Gruppen ID, eine Geräte ID einer Basisstation und eine Geräte ID einer Sende-/Empfangsvorrichtung.

Die Gruppen ID kennzeichnet eindeutig die Basisstation und sämtliche Sende/Empfangseinrichtungen einer Werkzeugmaschine. Somit ist mit Hilfe der Gruppen ID eindeutig identifizierbar, ob es sich bei einer Nachricht bzw. einem Datenpaket um eine Nachricht der eigenen Werkzeugmaschine handelt. Dazu wird in einem ersten Verfahrensschritt ein Datenpaket empfangen. Anschließend wird die in dem Datenpaket enthaltene Gruppen ID ausgewertet. Falls das Datenpaket eine unbekannte Gruppen ID enthält, so wird das Datenpaket von der Sende-/Empfangsvorrichtung verworfen. In diesem Fall wird davon ausgegangen werden, dass es sich um ein Datenpaket einer anderen Werkzeugmaschine handelt.

Die Geräte ID kennzeichnet jeweils ein Gerät, das heißt die Basisstation oder eine Sende-/Empfangsvorrichtung, einer Werkzeugmaschine. Zur Identifikation ob ein Datenpaket für eine Sende-/Empfangsvorrichtung bestimmt ist, wird in einem ersten Verfahrensschritt ein Datenpaket empfangen. Anschließend wird die in dem Datenpaket enthaltene Geräte ID ausgewertet. Falls das Datenpaket eine unbekannte Geräte ID enthält, wird das Datenpaket verworfen. In diesem Fall wird davon ausgegangen, dass das Datenpaket nicht für die Sende-/Empfangsvorrichtung bestimmt war.

Durch die Verwendung von Gruppen IDs und Geräte IDs ist ein gruppenweises Ansprechen von Sende-/Empfangsvorrichtungen durch eine Basisstation möglich. Zusätzlich ist auch ein gezieltes Ansprechen einer Sende-/Empfangsvorrichtung möglich. Dadurch wird die Prozessorlast der Basisstation verringert.

Es wird ferner ein nicht durch die Patentansprüche abgedechtes Verfahren zur Steuerung einer mit einer Sende-/Empfangsvorrichtung in Verbindung stehenden Basisstation in einem Positionsmesssystem für eine Maschine beschrieben. Die Basisstation führt die folgenden Verfahrensschritte aus: Senden der Basis-Seriennummer der Basisstation, Empfangen der Seriennummer der Sende-/Empfangsvorrichtung und Berechnen einer Geräte ID aus der empfangenen Seriennummer der Sende-/Empfangsvorrichtung.

Als weitere Verfahrensschritte werden eine Gruppen ID und eine Geräte ID aus der Seriennummer der Basisstation berechnet. Dadurch ist ein Anlernvorgang einer Sende-/Empfangsvorrichtung an die Basisstation möglich.

Nach dem Anlernvorgang kann ein Datenpaket enthaltend eine Gruppen ID, eine Geräte ID der Basisstation und eine Geräte ID einer Sende-/Empfangsvorrichtung gesendet werden.

Hinsichtlich eines Hardwareaspekts wird eine nicht von den Patentansprüchen abgedechte Sende-/Empfangsvorrichtung für ein Positionsmesssystem einer Maschine beshrieben. Die Sende-/Empfangsvorrichtung weist auf eine Sendeeinheit zum Senden einer ersten Sendeleistungsnachricht mit einer ersten Sendeleistung und eine Empfangseinheit zum Empfangen einer Bestätigungsnachricht als Antwort auf die gesendete erste Sendeleistungsnachricht, wobei die Sendeeinheit dazu ausgelegt ist, eine zweite Sendeleistungsnachricht mit einer zweiten Sendeleistung zu senden, wobei die zweite Sendeleistung kleiner als die erste Sendeleistung ist, falls eine Sendeleistungsbestätigungsnachricht als Antwort auf die erste Sendeleistungsnachricht empfangen wurde, und wobei die zweite Sendeleistung größer als die erste Sendeleistung ist, falls keine Sendeleistungsbestätigungsnachricht als Antwort auf die erste Sendeleistungsnachricht empfangen wurde.

Daneben wird eine nicht von den Patentansprüchen abgedechte Basisstation für ein Positionsmesssystem einer Maschine beschrieben. Die Basisstation umfasst eine Sendeeinheit zum Senden der Basis-Seriennummer der Basisstation, eine Empfangseinheit zum Empfangen der Seriennummer einer Sende-/Empfangsvorrichtung und eine Berechnungseinheit zum Berechnen einer Geräte ID aus der empfangenen Seriennummer der Sende-/Empfangsvorrichtung.

Weitere Merkmale, Eigenschaften, Vorteile und mögliche Abwandlungen der Technik zur Regelung der Sendeleistung einer Sende-/Empfangsvorrichtung werden anhand der nachstehenden Beschreibung verdeutlicht, in der auf die beigefügten Zeichnungen Bezug genommen ist.

### Kurze Beschreibung der Zeichnungen

- Fig. 1: zeigt ein Diagramm der Steuerung der Sendeleistung einer Sende- /Empfangsvorrichtung über der Zeit;
- Fig. 2: zeigt ein Leistungsdiagramm einer Steuerung der Sendeleistung einer Sende-/Empfangsvorrichtung über der Zeit;
- Fig. 3: zeigt ein Zeitdiagramm eines Weckvorgangs;
- Fig. 4: zeigt die Struktur eines Datenpakets;
- Fig. 5: zeigt die Struktur eines MAC-Rahmens eines Datenpakets;
- Fig. 6: zeigt eine erste Variante eines Messsystems in schematischer Darstel- lung;
- Fig. 7: zeigt eine zweite Variante eines Messsystems in schematischer Darstel- lung;
- Fig. 8: zeigt eine dritte Variante eines Messsystems in schematischer Darstel- lung;
- Fig. 9: zeigt eine vierte Variante eines Messsystems in schematischer Darstel- lung; und
- Fig. 10: zeigt ein Diagramm eines Anlernvorgangs einer Sende-/Empfangs- vorrichtung an einer Basisstation über der Zeit.

### Detaillierte Beschreibung

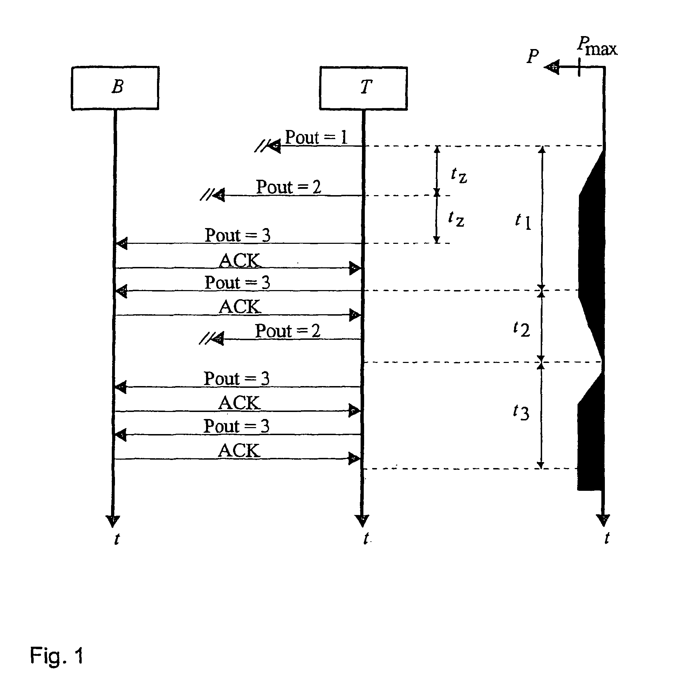

Fig. 1 zeigt den Ablauf einer Regelung der Sendeleistung einer mobilen Sende-/Empfangsvorrichtung T über der Zeit. Die mobile Sende-/Empfangsvorrichtung T kommuniziert mit einer Basisstation B. In dem Diagramm ist ferner die Sendeleistung P über der Zeit dargestellt.

Zu Beginn der Regelung der Sendeleistung wird eine erste Sendeleistungsnachricht mit einer Sendeleistung Pₒᵤₜ = 1 von der Sende-/Empfangsvorrichtung T an die Basisstation B gesendet. Nach Ablauf eines vorbestimmten Zeitintervalls wird keine Sendeleistungsbestätigungsnachricht ACK von der Sende-/Empfangsvorrichtung T empfangen. Somit kann davon ausgegangen werden, dass die Basisstation B die erste Sendeleistungsnachricht nicht erhalten hat. Folglich wird nach Ablauf eines zyklischen Zeitintervalls t_{z} eine zweite Sendeleistungsnachricht mit der Sendeleistung Pₒᵤₜ = 2 von der Sende-/Empfangsvorrichtung T an die Basisstation B gesendet. Auch auf diese Sendeleistungsnachricht wird keine Sendeleistungsbestätigungsnachricht ACK von der Sende-/Empfangsvorrichtung T empfangen. Somit wird erneut nach Ablauf eines Zeitintervalls t_{z} eine Sendeleistungsnachricht, diesmal mit der Sendeleistung Pₒᵤₜ = 3, von der Sende-/Empfangsvorrichtung T an die Basisstation B gesendet. Diesmal erreicht die Sendeleistungsnachricht die Basisstation B. Als Antwort auf die Sendeleistungsnachricht sendet die Basisstation B eine Sendeleistungsbestätigungsnachricht ACK an die Sende-/Empfangsvorrichtung T. Somit ist nach Ablauf des Zeitintervalls t₁ die untere Sendeleistungsgrenze für eine Kommunikation zwischen Sende-/Empfangsvorrichtung T und Basisstation B gefunden. Anschließend sendet die Sende-/Empfangsvorrichtung T nach Ablauf eines Zeitintervalls t_{z} erneut eine Sendeleistungsnachricht mit der Sendeleistung Pₒᵤₜ = 3. Die Sendebedingungen haben sich nicht verschlechtert und die Basisstation B empfängt die Sendeleistungsnachricht. Als Antwort auf die Sendeleistungsnachricht sendet sie eine Sendeleistungsbestätigungsnachricht ACK zurück an die Sende-/Empfangsvorrichtung T. Die Sende-/Empfangsvorrichtung T versucht sodann, ob eine Sendeleistungsnachricht mit einer geringeren Sendeleistung noch empfangen wird. Dazu sendet sie innerhalb des Zeitintervalls t₂ eine Sendeleistungsnachricht mit der Sendeleistung Pₒᵤₜ = 2. Nach Ablauf eines vorbestimmten Zeitintervalls empfängt die Sende-/Empfangsvorrichtung T jedoch keine Sendeleistungsbestätigungsnachricht ACK von der Basisstation B. Folglich weiß die Sende-/Empfangsvorrichtung T, dass sich die Sendeleistung Pₒᵤₜ = 2 unterhalb der gegenwärtigen unteren Sendeleistungsgrenze befindet. Somit sendet die Sende-/Empfangsvorrichtung T erneut eine Sendeleistungsnachricht mit der Sendeleistung Pₒᵤₜ = 3. Diese Sendeleistungsnachricht wird mit Hilfe einer Sendeleistungsbestätigungsnachricht ACK bestätigt. Das Verfahren wird fortgesetzt, in dem erneut eine Sendeleistungsnachricht mit der Sendeleistung Pₒᵤₜ = 3 von der Sende-/Empfangsvorrichtung T an die Basisstation B gesendet und mit Hilfe einer Sendeleistungsbestätigungsnachricht ACK bestätigt wird. Innerhalb des Zeitintervalls t₁ folgt somit eine sukzessive Erhöhung der Sendeleistung, innerhalb des Zeitintervalls t₂ eine sukzessiver Verringerung der Sendeleistung und innerhalb des Zeitintervalls t₃ wiederum eine sukzessiver Erhöhung der Sendeleistung. Die Erhöhung der Sendeleistung erfolgt bis zu einem Sendeleistungswert Pₘₐₓ, der Pₒᵤₜ = 3 entspricht, und die Verringerung der Sendeleistung erfolgt von dem Sendeleistungswert Pₘₐₓ.

Die Sendeleistungsnachrichten werden zyklisch, d.h. jeweils nach Ablauf des Zeitintervalls t_{z}, gesendet. Bei den Sendeleistungsnachrichten und den Sendeleistungsbestätigungsnachrichten handelt es sich um Chirp - Signale, die mit Hilfe eines Frequenzspreizverfahrens im ISM-Frequenzband übertragen werden. Die Signale können beispielsweise mit Hilfe eines drahtlosen nanoNET Netzwerkes der Firma nanotron TECHNOLOGIES übertragen werden.

Die Regelung der Sendeleistung der Sende-/Empfangsvorrichtung T verringert die Störung anderer Funksysteme. Darüber hinaus werden Eigenstörungen, das heißt Eigenüberlagerungen durch Reflexion mit Laufzeiteffekten, vermieden. Des Weiteren wird der Stromverbrauch der Sende-/Empfangsvorrichtung durch das Regelungsverfahren verringert.

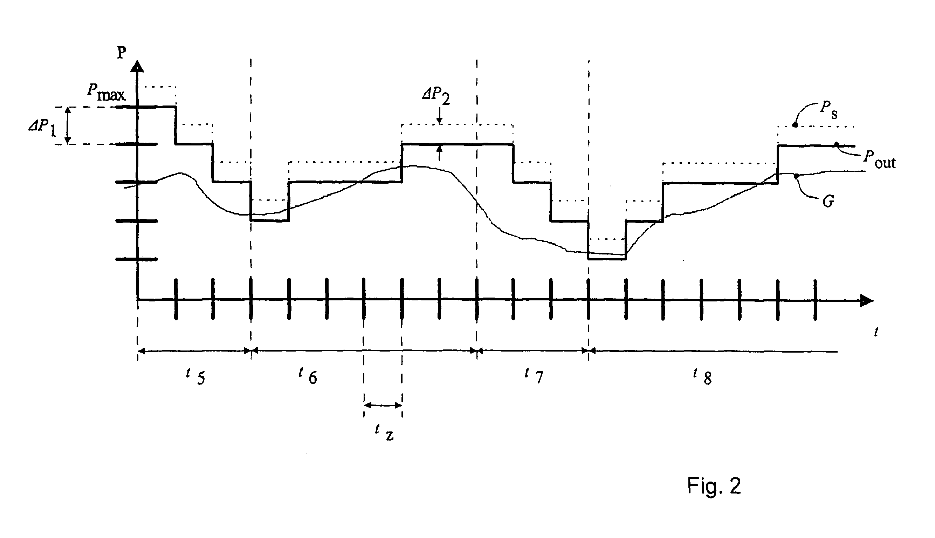

Fig. 2 zeigt ein Diagramm einer Regelung der Sendeleistung der Sende-/Empfangsvorrichtung über der Zeit. Pₒᵤₜ bezeichnet die Sendeleistung, mit der Sendeleistungsnachrichten gesendet werden, Pₛ bezeichnet die Sendeleistung, mit der Anfragenachrichten gesendet werden und G bezeichnet den Grenzwert der Sendeleistung für eine sichere Datenübertragung. Die Sendeleistung Pₛ, mit der Anfragenachrichten von der Sende-/Empfangsvorrichtung an die Basisstation gesendet werden ist jeweils einen Sendeleistungswert ΔP₂ höher als die aktuelle Sendeleistung Pₒᵤₜ, mit der Sendeleistungsnachrichten gesendet werden. Damit auch im Falle einer Sendeleistung nahe dem Grenzwert G kritische Schaltpunktnachrichten sicher übertragen werden können, werden die Anfragenachrichten mit dem zusätzlichen Sicherheitswert ΔP₂ an Sendeleistung übertragen.

Das Verfahren zur Regelung der Sendeleistung der mobilen Sende-/Empfangsvorrichtung beginnt mit dem Senden einer Sendeleistungsnachricht mit einer maximalen Sendeleistung Pₘₐₓ der Sende-/Empfangsvorrichtung. Dadurch wird eine erste Sendeleistungsnachricht mit einer hohen Wahrscheinlichkeit von der Basisstation empfangen. Die Sendeleistungsnachrichten werden zyklisch nach jeweiligen Zeitintervallen t_{z} gesendet. Bevorzugt beträgt das Zeitintervall t_{z} 10 bis 30ms. Bei dem Zeitintervall t₅ handelt es sich um eine Startphase. Diese Startphase wird bei einem Wechsel von einem Energiesparmodus in einen Betriebsmodus einmalig durchlaufen. Die eingestellte Sendeleistung der Sendeleistungsnachricht wird sukzessive an den niedrigsten Sendeleistungswert, das heißt den Grenzwert G, bei dem eine sichere Datenübertragung zwischen Sende-/Empfangsvorrichtung und Basisstation noch möglich ist, herangetastet. Eine Erhöhung bzw. Verringerung der Sendeleistung erfolgt jeweils um einen vorbestimmten Sendeleistungswert ΔP₁. In einer zweiten Zeitphase t₆ wird die Sendeleistung Pₒᵤₜ mit jeder zyklischen Sendeleistungsnachricht nach Bedarf sukzessive erhöht. Eine Absenkung der Sendleistung der Sendeleistungsnachricht Pₒᵤₜ geschieht in dieser Zeitphase t₆ nicht. Wie aus Fig. 2 ersichtlich ist, muss nicht nach jedem Zeitintervall t_{z}, das heißt nach jedem Senden einer Sendeleistungsnachricht die Sendeleistung nach oben bzw. nach unten geregelt werden. Es ist auch denkbar, dass die Sendeleistung Pₒᵤₜ zumindest innerhalb einer vorbestimmten Zeitphase bei eingehenden Sendeleistungsgbestätigungsnachrichten konstant bleibt.

Nach Ablauf der Zeitphase t₆ wird in eine Zeitphase t₇ übergegangen, in der versucht wird, die Sendeleistung Pₒᵤₜ möglichst gering zu halten. Dazu wird sukzessive die Sendeleistung reduziert, bis keine Kommunikation mit der Basisstation mehr möglich ist. In der Zeitphase t₇ erfolgt nur eine Verringerung der Sendeleistung der Sendeleistungsnachrichten und somit auch der Anfragenachrichten.

Nach Erreichen der unteren Grenze, das heißt wenn die Sendeleistung Pₒᵤₜ unterhalb des Grenzwertes G der Sendeleistung ist, wird in die Zeitphase t₈ übergegangen, in der wiederum eine sukzessive Erhöhung der Sendeleistung Pₒᵤₜ stattfindet. Der Grenzwert G der Sendeleistung ist jeweils von den Interferenzen über die Luftschnittstelle abhängig. Beispielsweise kann es bei einem hohen Aufkommen von Sendungen über die Luftschnittstelle zwischen einer Vielzahl von Sende-/Empfangsvorrichtungen und Basisstationen, insbesondere in einer Werkshalle, zu Interferenzen kommen. Entsprechend kann bei hohen Interferenzen der Grenzwert G steigen und bei geringen Interferenzen fallen.

Bei den Zeitintervallen t₅, t₆, t₇ und/oder t₈ kann es sich um vorbestimmte Zeitintervalle handeln.

Mit der in der Fig. 2 gezeigten Sendeleistung Pₛ können Anfragenachrichten von der Sende-/Empfangsvorrichtung an die Basisstation gesendet werden, mit deren Hilfe ein mit der Sende-/Empfangsvorrichtung in Verbindung stehender Messtaster von einem Energiesparmodus in einen Betriebsmodus versetzt, das heißt geweckt, werden kann.

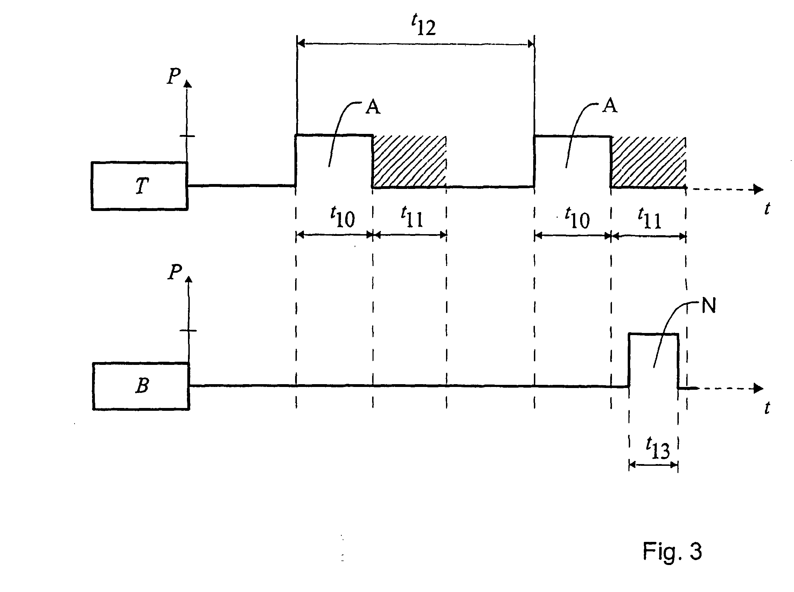

Fig. 3 zeigt den zeitlichen Ablauf eines Anlernvorgangs einer Sende-/Empfangsvorrichtung T an einer Basisstation B. Eine Anfragenachricht A wird dazu mit einer Sendeleistung P von der Sende-/Empfangsvorrichtung T an die Basisstation B gesendet. Die Anfragenachricht A hat eine Impulsdauer t₁₀ und wird zyklisch jeweils nach Ablauf eines Zeitintervalls t₁₂ gesendet. Innerhalb eines Zeitintervalls t₁₁ wartet die Sende-/Empfangsvorrichtung T auf den Empfang eine Anfragebestätigungsnachricht N. Das Zeitintervall t₁₀ beträgt in diesem Ausführungsbeispiel 300µs, das Zeitintervall t₁₁ 2 bis 300µs und das Zeitintervall t₁₂ 1000ms. Die Anfragebestätigungsnachricht N zeigt der Sende-/Empfangsvorrichtung T an, dass die Basisstation B mit ihr kommunizieren will. Wie aus Fig. 3 ersichtlich ist, empfängt die Sende-/Empfangsvorrichtung T nach dem zweiten Senden der Anfragenachricht A innerhalb des Zeitintervalls t₁₁ eine Anfragebestätigungsnachricht N. Diese Anfragebestätigungsnachricht N hat eine Impulsdauer t₁₃. Somit wird der Sende-/Empfangsvorrichtung T signalisiert, dass die Basisstation B mit der Sende-/Empfangsvorrichtung T kommunizieren will. Anschließend weckt die Sende-/Empfangsvorrichtung T einen mit ihr verbundenen Messtaster (nicht gezeigt), das heißt sie versetzt den Messtaster von einem Energiesparmodus in einen Betriebsmodus. Die Sende-/Empfangsvorrichtung T ist nur innerhalb des Zeitintervalls t₁₁ zum Empfang der Anfragebestätigungsnachricht N bereit. Würde eine Anfragebestätigungsnachricht N nach Ablauf des Zeitintervalls t₁₁ von der Basisstation B an die Sende-/Empfangsvorrichtung T gesendet werden, so würde kein Wecken des Messtasters erfolgen.

Eine Versetzung des Messtasters aus einem Betriebsmodus zurück in einen Energiesparmodus kann mit Hilfe einer Nachricht von der Basisstation B an die Sende-/Empfangsvorrichtung T oder nach Ablauf eines Zeitintervalls ohne Eingang einer Befehlsnachricht erfolgen.

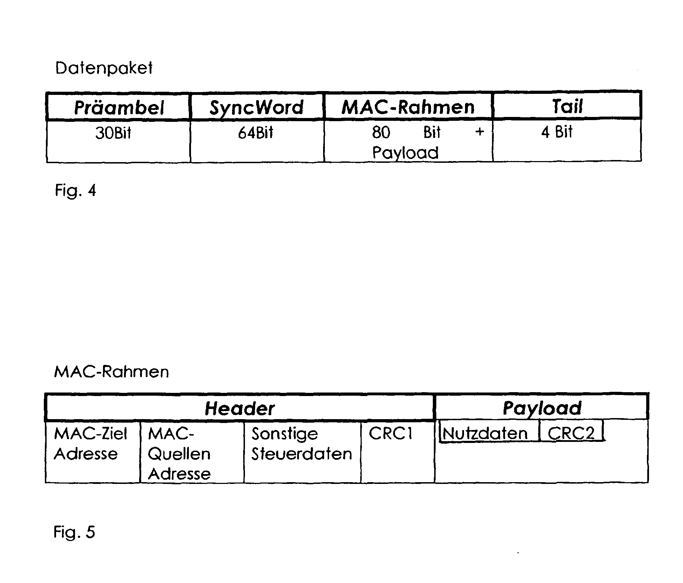

Fig. 4 zeigt die Struktur eines Datenpakets. Das Datenpaket kann zum Senden von Nachrichten zwischen einer Sende-/Empfangsvorrichtung und einer Basisstation und in umgekehrte Richtung verwendet werden. Das Datenpaket umfasst eine Präambel, ein SyncWort, einen MAC (Media Access Control) - Rahmen und ein Tail. Die Präambel umfasst 30 Bit und wird benötigt, damit sich ein Funkchip auf ein Datenpaket synchronisieren kann. Dies wird beispielsweise für Automatic Gain Control (AGC) und zur Bitsynchronisation benötigt. Das SyncWort umfasst 64 Bit und wird benötigt, um die Paketsynchronisation aufrechtzuerhalten. Bei dem SyncWort handelt es sich um eine Gruppen ID. Alle Geräte, die in eine Maschine eingesetzt werden, benutzen das gleiche SyncWort. Dadurch wird eine logische Abgrenzung zu benachbarten Systemen ermöglicht. Durch eine gezielte Veränderung des SyncWortes kann erreicht werden, dass sich nur Funkchips auf die entsprechenden Datenpakete synchronisieren können, welche das entsprechend richtige SyncWort besitzen. Somit verhält sich das SyncWort wie ein physikalischer Filter. Der MAC-Rahmen umfasst 80 Bit und die Payload, welche Nutzdaten beinhaltet. Schließlich umfasst das Datenpaket noch ein Ende, eine sogenanntes Tail, mit 4 Bit.

Fig. 5 zeigt die Datenstruktur des MAC-Rahmens. Der MAC-Rahmen umfasst einen Header und die Payload. Der Header umfasst eine MAC-Zieladresse, eine MAC-Quellenadresse, sonstige Steuerdaten und ein Feld CRC1 (Cyclic Redundancy Check). Die MAC-Zieladresse umfasst die Adresse des Ziels des Datenpakets, die MAC-Quellenadresse umfasst die Adresse des Absenders des Datenpakets, die sonstigen Steuerdaten umfassen Angaben über Paketlänge, Verschlüsselung, Fragmentierung, etc. und das Feld CRC1 umfasst einen Wert für die zyklische Redundanzprüfung des Headers. Die Payload umfasst Nutzdaten und ein Feld CRC2. Die Nutzdaten umfassen die eigentlichen Nutzinformationen des Datenpakets und das Feld CRC2 umfasst einen Wert für die zyklische Redundanzprüfung der Nutzdaten. Die Verwendung von MAC-Adressen, beispielsweise gemäß dem IEEE 802-1990 Standard, erlaubt die Adressierung einzelner Geräte innerhalb einer Gruppen ID. Bei der MAC-Adresse handelt es sich um eine Geräte ID.

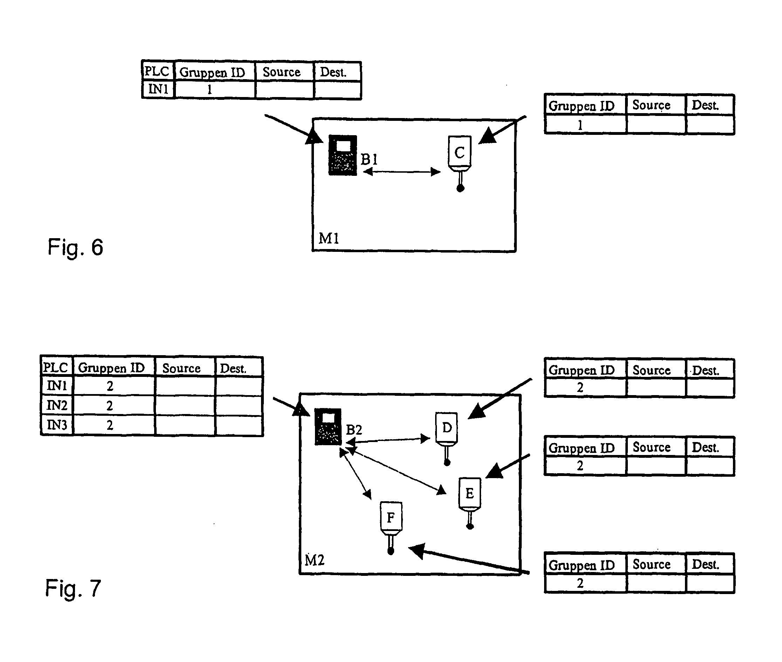

Die Fig. 6 bis 9 zeigen vier Varianten von Anlernvorgängen von Sende-/Empfangsvorrichtungen an eine Basisstationen in einem schematisch dargestellten Messsystem.

Fig. 6 zeigt eine Maschine M1 mit einer Basisstation B1 und einer Sende-/Empfangsvorrichtung C. Über die Gruppen ID wird die Maschine M1 definiert. Das heißt beide Elemente B1 und C gehören über die Gruppen ID = 1 zur Maschine M1. Folglich weiß die Sende-/Empfangsvorrichtung C, dass sie nur Datenpakete mit der Gruppen ID = 1 empfangen und verarbeiten muss.

Fig. 7 zeigt eine weitere Maschine M2 mit einer Basisstation B2 und drei damit in Verbindung stehende Sende-/Empfangsvorrichtungen D, E, F. Über die Gruppen ID = 2 wird festgelegt, dass sämtliche Vorrichtungen B2, D, E, F zur Maschine M2 gehören. So kann die Basisstation B2 einen Gruppenruf an sämtliche Sende-/Empfangsvorrichtungen D, E, F aussenden, wobei die Sende-/Empfangsvorrichtungen D, E und F das Datenpaket als für sie bestimmt über die Gruppen ID = 2 ausfiltern können.

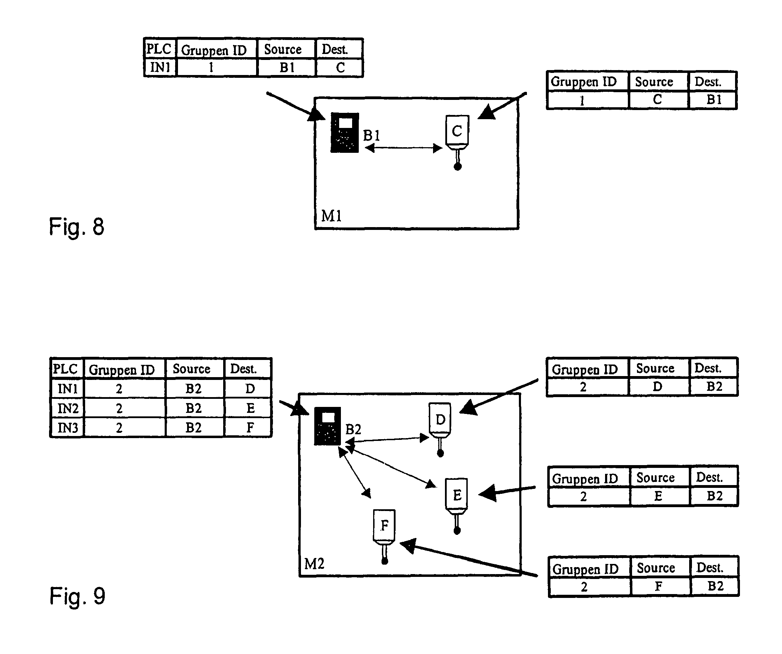

Fig. 8 zeigt eine Ausführungsform eines Sendens eines Datenpakets in der Maschine M1 gemäß Fig. 6. Die Basisstation B1 sendet eine Nachricht mit der Gruppen ID = 1, dem Feld "Source" = B1 und dem Feld "Dest" = C an die Sende-/Empfangsvorrichtung C. Das Feld "Source" bezeichnet dabei den Absender und das Feld "Dest" den Empfänger des Datenpakets. Die Sende-/Empfangsvorrichtung C wertet folglich zuerst die Gruppen ID aus. Die Gruppen ID = 1 zeigt der Sende-/Empfangsvorrichtung an, dass es sich um eine Nachricht der Maschine M1 handelt. Anschließend wird das Feld "Source" ausgelesen. Durch Auslesen des Feldes "Source" weiß die Sende-/Empfangsvorrichtung, dass die Nachricht von der Basisstation B1 stammt und durch Auslesen des Feldes "Dest" weiß sie, dass die Nachricht für sie bestimmt ist.

Fig. 9 zeigt eine Ausführungsform der Maschine M2 gemäß Fig. 7. Die Basisstation B2 der Maschine M2 kommuniziert mit den Sende-/Empfangsvorrichtungen D, E und F. Über die Gruppen ID = 2 wird festgelegt, dass es sich um Datenpakete der Maschine M2 handelt. Die Datenpakete von der Basisstation B2 weisen jeweils die Geräte ID "Dest" = B2 und die Geräte IDs "Source" = D, E, oder F auf. Somit können mit Hilfe der Datenpakete sämtliche Sende-/Empfangsvorrichtungen D, E, F bzw. damit in Verbindung stehende Messtastköpfe (nicht gezeigt) der Maschine M2 adressiert werden.

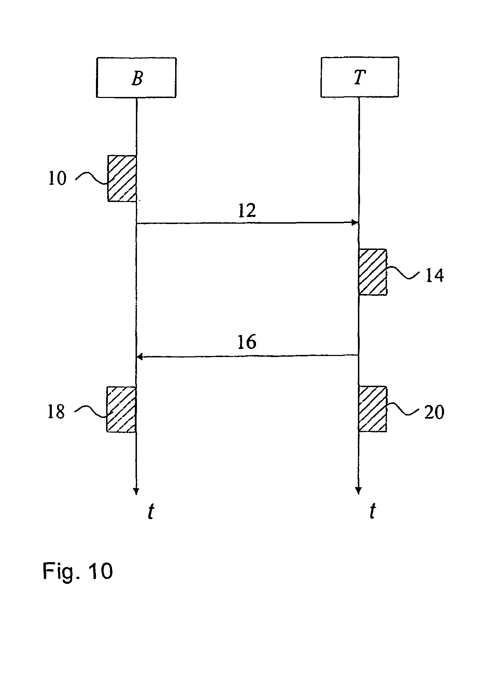

Fig. 10 zeigt schematisch den Ablauf eines Anlernvorgangs einer Sende-/Empfangsvorrichtung T an einer Basisstation B. Zuerst wird in einem Verfahrensschritt 10 aus der eigenen Seriennummer der Basisstation eine Gruppen ID berechnet. Die Seriennummer der Basisstation wird, wie durch den Pfeil 12 gezeigt, von der Basisstation B an die Sende-/Empfangsvorrichtung T gesendet. In Schritt 14 wird in der Sende-/Empfangsvorrichtung T mit Hilfe der empfangenen Basis-Seriennummer eine Gruppen ID berechnet. Anschließend wird in einem Schritt 16 die Seriennummer der Sende-/Empfangsvorrichtung T an die Basisstation B gesendet. Aus der empfangenen Seriennummer der Sende-/Empfangsvorrichtung wird eine Geräte ID der Sende-/Empfangsvorrichtung T berechnet (Schritt 18). Des Weiteren wird in Schritt 18 eine eigene Geräte ID aus der Seriennummer der Basisstation berechnet. In Schritt 20 wird in der Sende-/Empfangsvorrichtung aus der Seriennummer der Sende-/Empfangsvorrichtung eine eigene Geräte ID der Sende-/Empfangsvorrichtung T und aus der empfangenen Basis-Seriennummer der Basisstation B eine Basis-Geräte ID berechnet.

Durch den in Figur 10 gezeigten Anlernvorgang verfügen alle beteiligten Vorrichtungen B, T über die notwendigen Daten für eine gesicherte Kommunikation. Durch den Anlernvorgang sind auch die Gruppen ID und die Geräte ID der Basisstation B und der Sende-/Empfangsvorrichtung T in beiden Vorrichtungen bekannt.

## Patentansprüche

1. Verfahren zum Anlernen einer Sende-/Empfangsvorrichtung (T) an eine Basisstation (B) in einem Positionsmesssystem für eine Maschine, wobei die Basisstation (B) die folgenden Verfahrensschritte ausführt:
- Empfangen (16) der Seriennummer der Sende-/Empfangsvorrichtung von der Sende-/Empfangsvorrichtung (T); und
- Berechnen (18) einer Geräte ID der Sende-/Empfangsvorrichtung (T) aus der empfangenen Seriennummer der Sende-/Empfangsvorrichtung, **gekennzeichnet durch**
- Berechnen (10) einer Gruppen ID aus der Seriennummer der Basisstation;
- Senden (12) der Seriennummer der Basisstation an die Sende-/Empfangsvorrichtung (T); und
- Berechnen einer (18) Geräte ID der Basisstation aus der Seriennummer der Basisstation.

2. Verfahren nach Anspruch 1 mit dem weiteren Verfahrensschritt
- Senden eines Datenpakets enthaltend die Gruppen ID, die Geräte ID der Basisstation und die Geräte ID der Sende-/Empfangsvorrichtung an die Sende-/Empfangsvorrichtung (T).

3. Computerprogrammprodukt mit Programmcode zum Ausführen der Verfahrensschritte gemäß einem oder mehrerer der vorhergehenden Ansprüche, wenn das Computerprogrammprodukt in einem Computer ausgeführt wird.

4. Computerprogrammprodukt gemäß Anspruch 3, welches auf einem maschinenlesbaren Träger gespeichert ist.

## Claims

1. A method for teaching a transmission/reception device (T) with respect to a base station (B) in a position measuring system for a machine, wherein the base station (B) performs the following method steps:
- receiving (16) the serial number of the transmission/reception device from the transmission/reception device (T);
- calculating (18) a device ID of the transmission/reception device (T) from the received serial number of the transmission/reception device,
**characterised by**
- calculating (10) a group ID from the serial number of the base station;
- transmitting (12) the serial number of the base station to the transmission/ reception device (T); and
- calculating (18) a device ID of the base station from the serial number of the base station.

2. The method according to Claim 1, comprising the further method step:
- transmitting a data packet which includes the group ID, the device ID of the base station and the device ID of the transmission/reception device to the transmission/reception device (T).

3. A computer program product with a program code for performing the methods steps according to one or several of the preceding claims, when the computer program product is executed in a computer.

4. The computer program product according to Claim 3, which is stored on a machine-readable data carrier.

## Revendications

1. Procédé d'apprentissage d'un dispositif d'émission/réception (T) par rapport à une station de base (B) dans un système de mesure de position pour une machine, la station de base (B) effectuant les étapes de procédé suivantes :
- réception (16) du numéro de série du dispositif d'émission/réception en provenance du dispositif d'émission/réception (T) ; et
- calcul (18) d'un identifiant d'appareil du dispositif d'émission/réception (T) à partir du numéro de série reçu du dispositif d'émission/réception (T), **caractérisé par**
- le calcul (10) d'un identifiant de groupe à partir du numéro de série de la station de base ;
- l'émission (12) du numéro de série de la station de base vers le dispositif d'émission/réception (T) ; et
- le calcul (18) d'un identifiant d'appareil de la station de base à partir du numéro de série de la station de base.

2. Procédé selon la revendication 1, présentant l'étape de procédé supplémentaire consistant en
- l'émission vers le dispositif d'émission/réception (T) d'un paquet de données renfermant l'identifiant de groupe, l'identifiant d'appareil de la station de base et l'identifiant d'appareil du dispositif d'émission/réception.

3. Produit de programme d'ordinateur avec code de programme pour effectuer les étapes de procédé selon l'une ou plusieurs des revendications précédentes, lorsque le produit de programme d'ordinateur est exécuté dans un ordinateur.

4. Produit de programme d'ordinateur selon la revendication 3, qui est mémorisé ou stocké sur un support pouvant être lu par la machine.
